Europäisches Patentamt

(19) European Patent Office

Office européen des brevets

(11) Numéro de publication: **0 243 266**
**B1**

(12) **FASCICULE DE BREVET EUROPÉEN**

(45) Date de publication du fascicule du brevet:
07.02.90

(21) Numéro de dépôt: 87400921.0

(22) Date de dépôt: 21.04.87

(51) Int. Cl. ⁵: **B 60 K 17/16, B 60 K 17/24, B 60 K 5/04**

(54) Dispositif de transmission pour véhicule à traction avant.

(30) Priorité: 25.04.86 FR 8606022

(43) Date de publication de la demande:
28.10.87 Bulletin 87/44

(45) Mention de la délivrance du brevet:
07.02.90 Bulletin 90/06

(84) Etats contractants désignés:
DE ES FR GB IT SE

(56) Documents cité:
EP-A-0 090 944
FR-A-1 115 192
FR-A-1 156 754
GB-A-1 522 734
GB-A-2 136 373
US-A-3 118 515
US-A-3 327 556
US-A-3 848 431

DESIGN ENGINEERING, février 1981, pages 49-50,
Londres, GB; "Viscous coupling development for
automative transmissions"

(73) Titulaire: GLAENZER SPICER
10 Rue J.P. Timbaud
F-78301 Poissy (FR)

(72) Inventeur: Van Dest Jean-Claude
27, Chemin du Renard
F - 91100 Saintry Sur Seine (FR)

(74) Mandataire: Moncheny, Michel
c/o Cabinet Lavoix 2 Place d'Estienne d'Orves
F-75441 Paris Cedex 09 (FR)

EP 0 243 266 B1

LIBERGRAF, STOCKHOLM 1990

## Description

La présente invention concerne les dispositifs de transmission pour véhicules et notamment pour véhicules à traction avant.

L'évolution récente de telles transmissions a conduit à envisager différents types de configurations:

- tout d'abord lorsque le moteur est disposé transversalement par rapport à l'axe longitudinal du véhicule, on a été conduit, pour pouvoir utiliser deux arbres de transmission courts et de longueur égale, à prévoir à la sortie du différentiel intégré au groupe moto-propulseur, un arbre relais disposés du côté du différentiel le plus éloigné de la roue motrice associée, cet arbre relais étant supporté par un palier intermédiaire. Cette solution n'est pas très satisfaisante car l'implantation du palier intermédiaire n'est pas toujours aisée et le montage s'en trouve compliqué;
- on peut également prévoir une option consistant à incorporer au différentiel un dispositif de contrôle ou de blocage. Le dispositif de contrôle peut être un accouplement à glissement limité tel que connu par exemple sous la marque VISCODRIVE. L'inconvénient d'une telle solution réside principalement dans le fait qu'il faut modifier la partie du carter contenant la boîte de vitesses et le différentiel, ce qui complique bien entendu les opérations de fabrication et en augmente le coût;

On a également envisagé d'intégré des joints homocinétiques à des différentiels mais cette disposition présente trois inconvénients essentiels:

- un ensemble constitué par la boîte de vitesses et un ou deux arbres de transmission prémontés est encombrant et donc difficile à transporter. De plus, il est relativement fragile;
- l'étanchéité de la boîte de vitesse étant assurée non seulement par des joints tournants mais aussi par des soufflets en caoutchouc des joints, une détérioration de ces soufflets peut amener une perte d'huile de la boîte de vitesses et éventuellement sa détérioration;
- le remplacement d'un soufflet ou d'un arbre de transmission entraîne des démontages considérables.

Le but de l'invention est donc de proposer un dispositif de transmission, notamment pour véhicule à traction avant, qui offre de grandes possibilités d'adaptation à des configurations différentes, et cela au moindre coût.

A cet effet, l'invention a pour objet un dispositif de transmission comportant un différentiel et disposé entre un organe de sortie d'un groupe motopropulseur et des arbres de transmission reliés chacun à une roue motrice d'un véhicule automobile, le groupe motopropulseur comportant un carter dans lequel ledit organe de sortie est supporté à rotation par l'intermédiaire de roulements, caractérisé en ce qu'il comprend un premier arbre creux entraîné à partir de l'organe de sortie du groupe motopropulseur et monté en porte-à-faux à l'extérieur dudit carter, un mécanisme différentiel logé dans cet arbre creux et comprenant un organe d'entrée solidaire du premier arbre creux et deux organes de sortie coaxiaux reliés chacun à un joint à l'un desdits arbres de transmission, l'un des deux organes de sortie du mécanisme différentiel étant relié au joint associé par un arbre intermédiaire s'étendant à l'intérieur dudit premier arbre creux et à l'intérieur d'un deuxième arbre creux coaxial au premier et qui constitue ledit organe de sortie du groupe motopropulseur.

Suivant d'autres caractéristiques:

- l'un des organes de sortie du différentiel est venu de matière avec ou fixé à l'un des éléments du joint homocinétique associé;
- il est prévu un dispositif de contrôle du différentiel entre l'un des organes de ce différentiel et ledit arbre creux;
- l'arbre creux est relié à l'organe de sortie du groupe motopropulseur par des cannelures ou par un dispositif amortisseur de vibrations;
- l'emplacement pour le dispositif de contrôle du différentiel est prévu entre le différentiel et le dispositif amortisseur.

L'invention sera mieux comprise à l'aide de la description qui va suivre, donnée uniquement à titre d'exemple et faite en se référant aux dessins annexés, sur lesquels:

- la Fig. 1 est une vue schématique d'un dispositif de transmission suivant l'invention;
- la Fig. 2 est une vue en coupe longitudinale d'un mode de réalisation concret d'un tel dispositif;
- la Fig. 3 est une vue de détail d'une variante du dispositif de la Fig. 2; et
- la Fig. 4 est une vue partielle en coupe d'une autre variante.

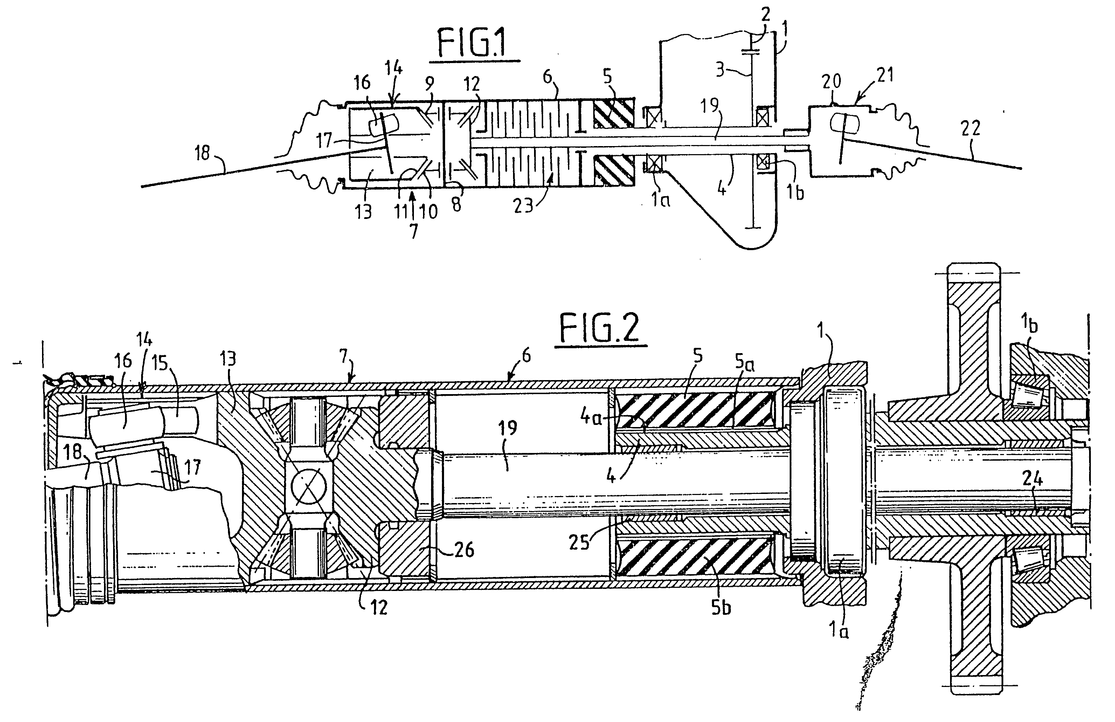

On voit sur la Fig. 1 une partie du carter 1 d'un groupe motopropulseur dont l'organe de sortie est désigné par la référence 4. Cet organe de sortie est un arbre creux solidaire d'un pignon 3 en prise avec un pignon 2 de boîte de vitesses et il est supporté dans le carter 1 par deux paliers 1a, 1b. Cet organe de sortie 4 est relié par un dispositif 5 amortisseur de vibrations constitué par une masse en élastomère, à un deuxième arbre creux 6 de diamètre plus important dans lequel sont disposés plusieurs composants de la transmission.

Tout d'abord, cet arbre creux 6 constitue un organe d'entrée pour un mécanisme différentiel 7. A cet effet, il est solidaire d'un porte-satellites 8 dans lequel sont montés rotatifs des pignons satellites 9, 10 engrenant avec deux pignons planétaires 11, 12 opposés et coaxiaux. Ces deux pignons planétaires 11, 12 constituent les organes de sortie du mécanisme différentiel.

Le planétaire 11 le plus éloigné du groupe motopropulseur est venu de matière avec ou solidaire de l'un 13 des éléments d'un joint homocinétique 14. Dans l'exemple représenté, il est venu de matière avec une tulipe 13 d'un joint à tripode, cette tulipe délimitant trois paires de chemins de roulement 15 dans lesquels sont reçus des galets 16 portés par des tourillons d'un tripode 17, ce tripode étant lui-même solidaire d'un arbre de transmission 18 relié par un autre joint homocinétique (non représenté) à une roue motrice du véhicule. Le joint 14 est un joint coulissant.

L'autre pignon planétaire 12 est solidaire d'un arbre 19 qui s'étend axialement dans les deux arbres creux 4, 6 et qui est relié à son extrémité opposée, à la tulipe 20 d'un deuxième joint homocinétique coulissant 21, par exemple du type à tripode. Ce deuxième joint homocinétique est lui-même relié par un arbre de transmission 22 à la deuxième roue motrice du véhicule (non représentée).

Dans l'arbre creux 6 est également reçu un dispositif 23 de contrôle du différentiel, constitué dans l'exemple représenté par un accouplement à glissement limité, par exemple du type connu sous la désignation VISCODRIVE. Un tel dispositif est bien connu et n'a donc pas à être décrit en détail.

D'autres dispositifs de contrôle ou de blocage du différentiel peuvent d'ailleurs être utilisés en lieu et place de cet accouplement, prévu entre l'arbre 19 et l'arbre creux 6.

La Fig. 2 représente un mode de réalisation plus concret d'un dispositif selon l'invention. Les éléments correspondants y sont désignés par les mêmes numéros de référence. On précisera simplement que le dispositif d'amortissement ou de filtrage des vibrations torsionnelles comprend une armature cylindrique interne cannelée 5a coopérant avec des cannelures correspondantes 4a prévues sur l'arbre creux 4 et une masse en élastomère 5b adhérisée, d'une part, sur ladite armature interne 5a et, d'autre part, sur l'arbre creux de plus grand diamètre 6.

Il est également prévu deux paliers 24, 25 entre l'arbre 19 solidaire du planétaire 12 et l'arbre creux 4 monté dans la boîte de vitesses par l'intermédiaire des roulements 1a, 1b.

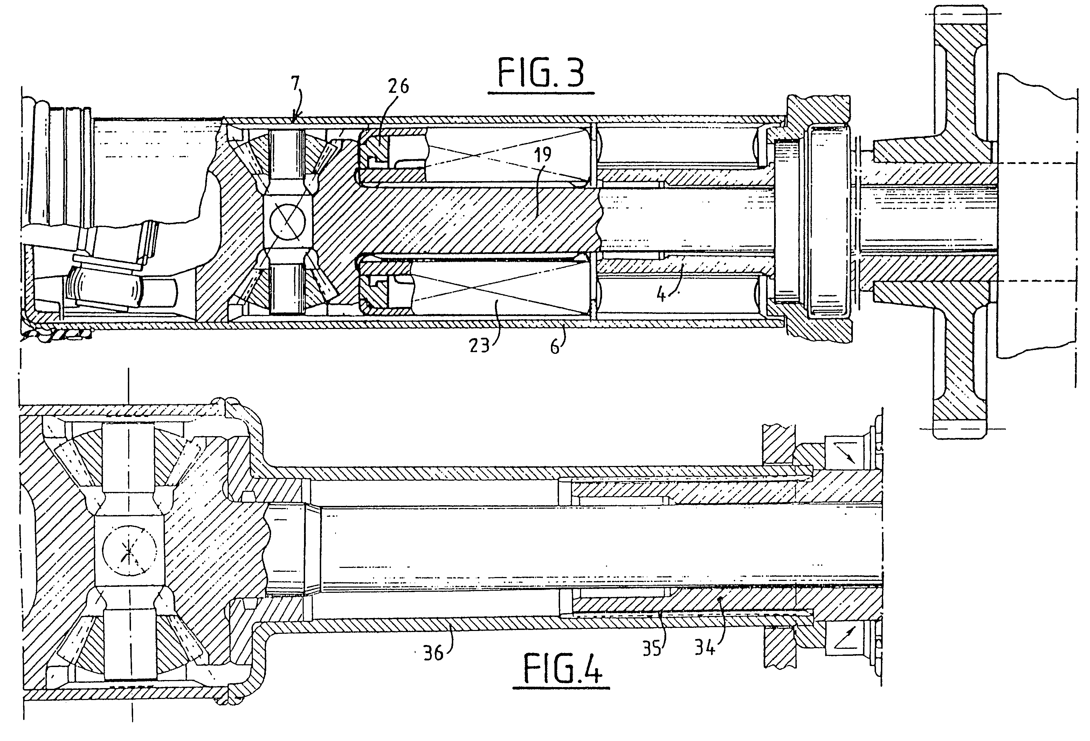

On voit sur la Fig. 2, que le volume compris entre le mécanisme différentiel 7 et le dispositif amortisseur de vibrations 5 est disponible et occupé en partie par un palier 26 disposé entre l'arbre tubulaire 6 et l'arbre central 19. Ce volume disponible peut également être occupé comme représenté sur la Fig. 3 par le dispositif de contrôle du différentiel 23 constitué par exemple par un accouplement à glissement limité représenté schématiquement sur cette Fig. 3. Dans ce cas le palier 26 est incorporé au dispositif de contrôle 23.

Sur les Fig. 2 et 3, l'arbre creux 6, le mécanisme différentiel 7 et le joint homocinétique intégré 14, ainsi que, le cas échéant, le dispositif 5 amortisseur de vibrations et/ou le dispositif 23 de contrôle du différentiel constituent avec les arbres de transmission destinés à être reliés aux roues motrices, un sous-ensemble autonome pouvant être monté aisément sur le groupe motopropulseur.

Un tel agencement offre de nombreux avantages parmi lesquels:

– il permet d'atteindre des coûts de fabrication et de montage inférieurs car on peut utiliser le même carter de groupe motopropulseur ou de boîte de vitesses tout en permettant diverses options, selon que le sous-ensemble rapporté sur ce groupe comporte ou non un dispositif amortisseur de vibrations et/ou un dispositif de contrôle du différentiel;
– une économie sensible résulte également du fait que l'un des deux joints homocinétiques est intégré à ce sous-ensemble;
– le support de l'arbre intermédiaire nécessaire dans l'état de la technique antérieure est également supprimé car l'arbre creux 6 monté en porte-à-faux offre cependant une rigidité suffisante aidé en cela par l'arbre 19 tenu par deux paliers 24 et 25;
– les temps de montage sont réduits;
– l'ensemble de la boîte de vitesses est indépendant des diverses options possibles. De plus, cette boîte de vitesses peut être terminée et essayée entièrement avant le montage des transmissions;
– le fait que cette boîte de vitesses soit séparée du carter dans lequel est reçu le joint homocinétique, bien que ce dernier soit intégré au différentiel, est important car l'on est certain que cette boîte de vitesses est correctement lubrifiée et ne risque pas d'être endommagée en cas de fuite de lubrifiant au niveau des soufflets des joints homocinétiques;
– étant donné la présence des paliers 24, 25 et du palier 26, les guidages sont améliorés ce qui se traduit par une réduction des bruits;
– le dispositif 23 d'accouplement à glissement limité peut être réalisé de façon standard car il n'est plus dépendant de la position du différentiel. Il peut en particulier être conçu sous la forme d'une cartouche séparée et prémontée, l'ajustement en ce qui concerne le couple s'effectuant en choisissant convenablement le nombre de disques et par conséquent la longueur de la cartouche, et le taux de remplissage de cette cartouche en liquide à base de silicone au analogue;
– les modalités de conditionnement et de transport sont sensiblement améliorées car l'ensemble du groupe motopropulseur ou de la boîte de vitesses ne comporte aucune partie en saillie et le sous-ensemble défini ci-dessus peut également être transporté dans des conditions satisfaisantes.

On a représenté à la Fig. 4, une autre variante simplifiée, dans laquelle aucun dispositif amortisseur de vibrations n'est prévu, ni d'emplacement permettant de recevoir un dispositif d'accouplement à glissement limité. Dans ce cas, l'arbre creux 36 peut avoir un diamètre plus faible sur une partie de sa longueur et il est simplement relié au deuxième arbre creux 34 par des cannelures 35, l'agencement s'en trouvant de ce fait simplifié.

Au titre d'autres variantes, on notera que ce différentiel peut être d'un type différent de celui représenté, par exemple de type épicycloïdal, et que d'autres joints homocinétiques coulissants peuvent être prévus, par exemples des joints "RZEPPA" à billes.

## Revendications

1. Dispositif de transmission comportant un différentiel et disposé entre un organe de sortie (4) d'un groupe motopropulseur (1) et des arbres de transmission (18, 22) reliés chacun à une roue motrice d'un véhicule automobile, le groupe motopropulseur comportant un carter (1) dans lequel ledit organe de sortie (4) est supporté à rotation par l'intermédiaire de roulements (1a, 1b), caractérise en ce qu'il comprend un premier arbre creux (6) entraîné à partir de l'organe de sortie (4) du groupe motopropulseur et monté en porte-à-faux à l'extérieur dudit carter (1), un mécanisme différentiel (7) logé dans cet arbre creux (6), et comprenant un organe d'entrée (8) solidaire du premier arbre creux (6) et deux organes de sortie coaxiaux (11, 12) reliés chacun à un joint (14, 21) associé à l'un desdits arbres de transmission (18, 22), l'un (12) des deux organes de sortie du mécanisme différentiel (7) étant relié au joint associé par un arbre intermédiaire (19) s'étendant à l'intérieur dudit premier arbre creux (6) et à l'intérieur d'un deuxième arbre creux (4) coaxial au premier et qui constitue ledit organe de sortie du groupe motopropulseur.

2. Dispositif suivant la revendication 1, caractérisé en ce que l'un (11) des organes de sortie du différentiel est venu de matière avec ou fixé à l'un (13) des éléments du joint homocinétique associé (14).

3. Dispositif suivant la revendication 1, caractérisé en ce qu'il est prévu un dispositif (23) de contrôle du différentiel entre l'un (12) des organes de ce différentiel et ledit arbre creux (6).

4. Dispositif suivant la revendication 1, caractérisé en ce que l'arbre creux (6) est relié à l'organe de sortie (4) du groupe motopropulseur (1) par des cannelures (35).

5. Dispositif suivant la revendication 1, caractérisé en ce que l'arbre creux (6) est relié à l'organe de sortie (4) du groupe motopropulseur (1) par un dispositif amortiseur de vibrations (5).

6. Dispositif suivant les revendications 3 et 5, caractérisé en ce que l'emplacement pour le dispositif (21) de contrôle du différentiel (7) est prévu entre ce différentiel et le dispositif amortisseur (5).

7. Dispositif suivant la revendication 1, caractérisé en ce que l'arbre intermédiaire (19) s'étendant à l'intérieur des deux arbres creux (4, 6) est supporté dans l'arbre creux (4) constituant l'organe de sortie du groupe par deux paliers (24, 25).

8. Dispositif suivant la revendiation 1, caractérisé en ce qu'un palier (26) est interposé entre l'arbre creux (6) et l'arbre intermédiaire (19).

9. Dispositif suivant l'une quelconque des revendications 1 à 8, caractérisé en ce que le premier arbre creux (6) et les mécanismes et dispositifs qu'il contient constituent un sous-ensemble adapé pour être monté sur le groupe motopropulseur.

## Patentansprüche

1. Antriebsvorrichtung, die ein Differential umfaßt und zwischen dem Abtriebsorgan (4) eines Triebswerks (1) sowie Antriebswellen (18, 22) angeordnet ist, die jeweils mit einem Antriebsrad eines Kraftfahrzeuges verbunden sind, wobei das Triebwerk ein Gehäuse (1) umfaßt, in dem das besagte Abtriebsorgan (4) drehbar in Lagern (1a, 1b) gelagert ist, *dadurch gekennzeichnet*, daß die Antriebsvorrichtung eine erste Hohlwelle (6) umfaßt, die von dem Abtriebsorgan (4) des Triebwerks angetrieben wird und freitragend außerhalb des besagten Gehäuses (1) montiert ist, sowie ein in dieser Hohlwelle (6) befindliches Differential (7), ein mit der ersten Hohlwelle (6) fest verbundenes Eingangsorgan (8) und zwei koaxiale Abtriebsorgane (11, 12), die jeweils mit einem Gelenk (14, 21) verbunden sind, das einer der besagten Antriebswellen (18, 22) zugeordnet ist, wobei eines (12) der beiden Abtriebsorgane des Differentials (7) über eine Zwischenwelle (19) mit dem zugehörigen Gelenk verbunden ist, und wobei diese Zwischenwelle innerhalb der besagten ersten Hohlwelle (6) sowie innerhalb einer zweiten Hohlwelle (4) verläuft, die koaxial zu der ersten Hohlwelle angeordnet ist und das besagte Abtriebsorgan des Triebwerks darstellt.

2. Vorrichtung gemäß Anspruch 1, *dadurch gekennzeichnet*, daß eines (11) der Abtriebsorgane des Differentials mit einem (13) der Teile des zugehörigen Gleichlaufgelenks (14) einstückig ausgebildet oder an diesem befestigt ist.

3. Vorrichtung gemäß Anspruch 1, *dadurch gekennzeichnet*, daß eine Regelvorrichtung (23) des Differentials zwischen einem (12) der Organe dieses Differentials und der besagten Hohlwelle (6) vorgesehen ist.

4. Vorrichtung gemäß Anspruch 1, *dadurch ge-*

*kennzeichnet,* daß die Hohlwelle (6) mit dem Abtriebsorgan (4) des Triebwerks (1) durch Nuten (35) verbunden ist.

5. Vorrichtung gemäß Anspruch 1, *dadurch gekennzeichnet,* daß die Hohlwelle (6) mit dem Abtriebsorgan (4) des Triebwerks (1) durch eine schwingungsdämpfende Vorrichtung (5) verbunden ist.

6. Vorrichtung gemäß den Ansprüchen 3 und 5, *dadurch gekennzeichnet,* daß die Regelvorrichtung (23) des Differentials (7) zwischen diesem Differential und der Dämpfungsvorrichtung (5) vorgesehen ist.

7. Vorrichtung gemäß Anspruch 1, *dadurch gekennzeichnet,* daß die innerhalb der beiden Hohlwellen (4, 6) verlaufende Zwischenwelle (19) in der Hohlwelle (4), die das Abtriebsorgan des Triebwerks darstellt, durch zwei Lager (24, 25) gehalten wird.

8. Vorrichtung gemäß Anspruch 1, *dadurch gekennzeichnet,* daß zwischen der Hohlwelle (6) und der Zwischenwelle (19) ein Lager (26) angeordnet ist.

9. Vorrichtung gemäß einem der Ansprüche 1 bis 8, *dadurch gekennzeichnet,* daß die erste Hohlwelle (6) und die darin befindlichen Mechanismen und Vorrichtungen ein Teilsystem darstellen, das in das Triebwerk einzusetzen ist.

## Claims

1. A transmission device comprising a differential and disposed between an output member (4) of an engine drive unit (1) and transmission shafts (18, 22) each connected to a driving wheel of a motor vehicle, the engine drive unit comprising a casing (1) in which the output member (4) is rotatably supported via roller bearings (1a, 1b), characterized in that it comprises a first hollow shaft (6) entrained by the output member (4) of the engine drive unit and mounted overhung outside the casing (1), a differential mechanism (7) received in the hollow shaft (6) and comprising an input member (8) connected to the first hollow shaft (6) and two coaxial output members (11, 12) each connected to a joint (14, 21) associated with one of the transmission shafts (18, 22), one (12) of the two output members of the differential mechanism (7) being connected to the associated joint via an intermediate shaft (19) extending inside the first hollow shaft (6) and inside a second hollow shaft (4) coaxial with the first hollow shaft and forming the output member of the engine drive unit.

2. A device according to claim 1, characterized in that one (11) of the output members of the differential is unitary with or attached to one (13) of the elements of the associated homokinetic joint (14).

3. A device according to claim 1, characterized in that a differential control device (23) is provided between one (12) of the members of the differential and the hollow shaft (6).

4. A device according to claim 1, characterized in that the hollow shaft (6) is connected to the output member (4) of the motor drive unit (1) via splines (35).

5. A device according to claim 1, characterized in that the hollow shaft (6) is connected to the output member (4) of the motor drive unit (1) via a vibration damping device (5).

6. A device according to claims 3 and 5, characterized in that the location for the control device (23) of the differential (7) is provided between the differential and the damping device (5).

7. A device according to claim 1, characterized in that the intermediate shaft (19) extending inside the two hollow shafts (4, 6) is supported by two bearings (24, 25) in the hollow shaft (4) forming the output member of the engine drive unit.

8. A device according to claim 1, characterized in that a bearing (26) is interposed between the hollow shaft (6) and the intermediate shaft (19).

9. A device according to any of claims 1 to 8, characterized in that the first hollow shaft (6) and the mechanisms and devices which it contains form a subassembly adapted to be mounted on the engine drive unit.

FIG.1

FIG.2

FIG.3

FIG.4

EP 0 243 266 B1